(19) Europäisches Patentamt
European Patent Office
Office européen des brevets

(11) **EP 4 672 740 A1**

(12) **EUROPEAN PATENT APPLICATION**

(43) Date of publication:
**31.12.2025 Bulletin 2026/01**

(21) Application number: 24306016.7

(22) Date of filing: **25.06.2024**

(51) International Patent Classification (IPC):
**H04N 19/105** (2014.01)      **H04N 19/11** (2014.01)
**H04N 19/176** (2014.01)      **H04N 19/593** (2014.01)

(52) Cooperative Patent Classification (CPC):
**H04N 19/11; H04N 19/105; H04N 19/147;**
**H04N 19/176; H04N 19/593**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: InterDigital CE Patent Holdings, SAS
**75017 Paris (FR)**

(72) Inventors:
• **RATH, Gagan Bihari**
  **35000 RENNES (FR)**
• **RADOSAVLJEVIC, Milos**
  **35000 RENNES (FR)**
• **ROBERT, Antoine**
  **35140 MEZIERES SUR COUESNON (FR)**

(74) Representative: **Interdigital**
**Immeuble ZEN 2**
**845 A, avenue des Champs Blancs**
**35510 Cesson-Sévigné (FR)**

(54) **TEMPLATE BASED INTRA MODE DERIVATION IMPROVEMENTS**

(57)   A method for encoding comprising:
obtaining (700) a target block;
obtaining a neighbor template of samples in a reconstructed neighborhood of the target block, a width of the neighbor template being based (701, 702, 703) on a height of the target block and a height of the neighbor template being based (704, 706, 705) on a width of the target block;
determining a predictor block for the target block based on a minimization of a distortion between a prediction of the neighbor template from a reference array of samples in a reconstructed neighborhood of the neighbor template and the neighbor template.

Fig. 7C

## Description

### 1. TECHNICAL FIELD

At least one of the present embodiments generally relates to a method and a device for applying intra prediction in a picture.

### 2. BACKGROUND

To achieve high compression efficiency, video coding schemes usually employ predictions and transforms to leverage spatial and temporal redundancies in a video content. During an encoding, pictures of the video content are divided into blocks of samples (i.e., pixels), these blocks being then partitioned into one or more sub-blocks, called original sub-blocks in the following. An intra or inter prediction is then applied to each sub-block to exploit intra or inter image correlations. Whatever the prediction method used (intra or inter), a predictor sub-block is determined for each original sub-block. Then, a sub-block representing a difference between the original sub-block and the predictor sub-block, often denoted as a prediction error sub-block, or a prediction residual sub-block, or simply a residual sub-block, is transformed, quantized, and entropy coded to generate an encoded video stream. To reconstruct the video, the compressed data is decoded by inverse processes corresponding to the transform, quantization, and entropic coding.

Many coding tools for intra prediction were proposed in the past. Until recently, a great majority of intra prediction tools were forward prediction tools, that is, the prediction methods used at the encoder is explicitly signaled to the decoder. Thus, the decoder complexity is kept at the minimum.

A current trend is to complement the forward intra prediction tools by intra tools employing backward estimation, that is, the intra prediction modes are estimated using already decoded causal samples in a picture. Template based intra mode derivation and fusion (TIMD) is an intra prediction tool where the intra prediction mode of a target block is estimated using a template consisting of already decoded samples on the left and top of the block. In current implementations of TIMD, some features of the target block are not considered in the application of the TIMD tool.

It is desirable to propose solutions allowing to overcome the above issue. In particular, it is desirable to propose solution to improve the TIMD tool.

### 3. BRIEF SUMMARY

In a first aspect, one or more of the present embodiments provide a method for encoding comprising:

> obtaining a target block;
> obtaining a neighbor template of samples in a reconstructed neighborhood of the target block, a width of the neighbor template being based on a height of the target block and a height of the neighbor template being based on a width of the target block; determining a predictor block for the target block based on a minimization of a distortion between a prediction of the neighbor template from a reference array of samples in a reconstructed neighborhood of the neighbor template and the neighbor template.

In a second aspect, one or more of the present embodiments provide a method for decoding comprising:

> obtaining a target block;
> obtaining a neighbor template of samples in a reconstructed neighborhood of the target block, a width of the neighbor template being based on a height of the target block and a height of the neighbor template being based on a width of the target block; determining a predictor block for the target block based on a minimization of a distortion between a prediction of the neighbor template from a reference array of samples in a reconstructed neighborhood of the neighbor template and the neighbor template.

In an embodiment of the first and the second aspect, a width of the template is equal to two responsive to the height of the target block is four or eight and is equal to four otherwise and a height of the template is equal to two responsive to the width of the target block is four or eight and is equal to four otherwise.

In a third aspect, one or more of the present embodiments provide a method for encoding comprising:

> obtaining a target block;
> obtaining a neighbor template of samples in a reconstructed neighborhood of the target block;
> obtaining a reference array of reconstructed samples in a neighborhood of the neighbor template;
> determining an initial primary intra prediction mode providing a lowest value of a distortion metric and an initial secondary intra prediction mode providing a second lowest value of the distortion metric, the distortion metric being calculated for each intra prediction mode of a plurality of intra prediction modes between a prediction of the neighbor template from the reference array using the intra prediction mode and the neighbor template;
> forming a first set of derived intra prediction modes by refining the initial primary intra prediction mode and a second set of derived intra prediction modes by refining the initial secondary intra prediction mode; selecting in each set the derived intra prediction mode minimizing the distortion metric and defining the selected derived intra prediction mode with the lowest value of the distortion metric as a primary intra prediction mode and the other selected derived intra prediction mode as a secondary intra prediction; generating a predictor block for the current block based on comparison of the value of the distortion metric corresponding to the primary intra prediction mode to a function of the value of the distortion metric corresponding to the secondary intra prediction mode.

In a fourth aspect, one or more of the present embodiments provide a method for decoding comprising:

obtaining a target block;

obtaining a neighbor template of samples in a reconstructed neighborhood of the target block;

determining an initial primary intra prediction mode providing a lowest value of a distortion metric and an initial secondary intra prediction mode providing a second lowest value of the distortion metric, the distortion metric being calculated for each intra prediction mode of a plurality of intra prediction mode between a prediction of the neighbor template from the reference array using the intra prediction mode and the neighbor template;

forming a first set of derived intra prediction modes by refining the initial primary intra prediction mode and a second set of derived intra prediction modes by refining the initial secondary intra prediction mode;

selecting in each set the derived intra prediction mode minimizing the distortion metric and defining the selected derived intra prediction mode with the lowest value of the distortion metric as a primary intra prediction mode and the other selected derived intra prediction mode as a secondary intra prediction;

generating a predictor block for the current block based on comparison of the value of the distortion metric corresponding to the primary intra prediction mode to a function of the value of the distortion metric corresponding to the secondary intra prediction mode.

In a fifth aspect, one or more of the present embodiments provide a method for encoding comprising:

obtaining a target block and a neighbor template of samples in a reconstructed neighborhood of the target block;

obtaining a reference array of samples in a reconstructed neighborhood of the neighboring template, a left part and a top part of the reference array depending at least on a width and a height of the target block;

obtaining a set of regular intra prediction modes;

for each regular intra prediction mode of the set:

predicting the neighboring template from the reference array based on the regular intra prediction mode; and,

determining a value of a distortion metric computed between the prediction of the reference template and the reference template;

determining an intra prediction mode of the plurality with a minimum value of the distortion metric as a primary intra prediction mode; and, generating a predictor block of the target block based at least on the primary intra prediction mode.

In a sixth aspect, one or more of the present embodiments provide a method for decoding comprising:

obtaining a target block and a neighbor template of samples in a reconstructed neighborhood of the target block;

obtaining a reference array of samples in a reconstructed neighborhood of the neighboring template, a left part and a top part of the reference array depending at least on a width and a height of the target block;

obtaining a set of regular intra prediction modes;

for each regular intra prediction mode of the set:

predicting the neighboring template from the reference array based on the regular intra prediction mode; and,

determining a value of a distortion metric computed between the prediction of the reference template and the reference template;

determining an intra prediction mode of the plurality with a minimum value of the distortion metric as a primary intra prediction mode; and, generating a predictor block of the target block based at least on the primary intra prediction mode.

In an embodiment of the fifth or sixth aspects, the left part and the top part of the reference array depend also on a width and a height of the reference template.

In a seventh aspect, one or more of the present embodiments provide a method for encoding comprising:

obtaining a target block;

obtaining a neighbor template of samples in a reconstructed neighborhood of the target block;

obtaining an array of reference reconstructed samples in a neighborhood of the reference template;

determining a predictor block for the target block based on a minimization process, the minimization process comprising determining a distortion between a prediction of the neighbor template from the reference array and the neighbor template for each candidate intra prediction mode of a plurality of candidate intra prediction modes, the prediction of the neighbor template comprising generating a prediction of a first part among a left or a top part of the neighbor template from the reference array using the candidate intra prediction mode and generating a prediction of second part among the left or top part of the neighbor template from the reference array using an intra prediction mode having a prediction direction opposite to a prediction direction of the candidate intra prediction.

In an eighth aspect, one or more of the present embodiments provide a method for decoding comprising:

obtaining a target block;
obtaining a neighbor template of samples in a reconstructed neighborhood of the target block;
obtaining an array of reference samples in a reconstructed neighborhood of the reference template;
determining a predictor block for the target block based on a minimization process, the minimization process comprising determining a distortion between a prediction of the neighbor template from the reference array and the neighbor template for each candidate intra prediction mode of a plurality of candidate intra prediction modes, the prediction of the neighbor template comprising generating a prediction of a first part among a left or a top part of the neighbor template from the reference array using the candidate intra prediction mode and generating a prediction of second part among the left or top part of the neighbor template from the reference array using an intra prediction mode having a prediction direction opposite to a prediction direction of the candidate intra prediction.

In a ninth aspect, one or more of the present embodiments provide a device comprising electronic circuitry configured for:

obtaining a target block;
obtaining a neighbor template of samples in a reconstructed neighborhood of the target block, a width of the neighbor template being based on a height of the target block and a height of the neighbor template being based on a width of the target block;
determining a predictor block for the target block based on a minimization of a distortion between a prediction of the neighbor template from a reference array of samples in a reconstructed neighborhood of the neighbor template and the neighbor template.

In a tenth aspect, one or more of the present embodiments provide a device comprising electronic circuitry configured for:

obtaining a target block;
obtaining a neighbor template of samples in a reconstructed neighborhood of the target block;
obtaining a reference array of reconstructed samples in a neighborhood of the neighbor template;
determining an initial primary intra prediction mode providing a lowest value of a distortion metric and an initial secondary intra prediction mode providing a second lowest value of the distortion metric, the distortion metric being calculated for each intra prediction mode of a plurality of intra prediction modes between a prediction of the neighbor template from the reference array using the intra prediction mode and the neighbor template;
forming a first set of derived intra prediction modes by refining the initial primary intra prediction mode and a second set of derived intra prediction modes by refining the initial secondary intra prediction mode;
selecting in each set the derived intra prediction mode minimizing the distortion metric and defining the selected derived intra prediction mode with the lowest value of the distortion metric as a primary intra prediction mode and the other selected derived intra prediction mode as a secondary intra prediction;
generating a predictor block for the current block based on comparison of the value of the distortion metric corresponding to the primary intra prediction mode to a function of the value of the distortion metric corresponding to the secondary intra prediction mode.

In an eleventh aspect, one or more of the present embodiments provide a device comprising electronic circuitry configured for:

obtaining a target block and a neighbor template of samples in a reconstructed neighborhood of the target block;
obtaining a reference array of samples in a reconstructed neighborhood of the neighboring template, a left part and a top part of the reference array depending at least on a width and a height of the target block;
obtaining a set of regular intra prediction modes;
for each regular intra prediction mode of the set:

predicting the neighboring template from the reference array based on the regular intra prediction mode; and,
determining a value of a distortion metric computed between the prediction of the reference template and the reference template;
determining an intra prediction mode of the plurality with a minimum value of the distortion metric as a primary intra prediction mode; and,
generating a predictor block of the target block based at least on the primary intra prediction mode.

In a twelfth aspect, one or more of the present embodiments provide a device comprising electronic circuitry configured for:

obtaining a target block;
obtaining a neighbor template of samples in a reconstructed neighborhood of the target block;
obtaining an array of reference reconstructed samples in a neighborhood of the reference template; determining a predictor block for the target block based on a minimization process, the minimization process comprising determining a distortion between a prediction of the neighbor template from the reference array and the neighbor template for each candidate intra prediction mode of a plurality of candidate intra prediction modes, the prediction of the neighbor template comprising generating a prediction of a first part among a left or a top part of the neighbor template from the reference array using the candidate intra prediction mode and generating a prediction of second part among the left or top part of the neighbor template from the reference array using an intra prediction mode having a prediction direction opposite to a prediction direction of the candidate intra prediction.

In a thirteenth aspect, one or more of the present embodiments provide a non-transitory information storage medium storing program code instructions for implementing the method of the first, second, third, fourth, fifth, sixth, seventh and eighth aspect.

In a fourteenth aspect, one or more of the present embodiments provide a computer program comprising program code instructions for implementing the method according to the first aspect, second, third, fourth, fifth, sixth, seventh and eighth aspect.

## 4. BRIEF SUMMARY OF THE DRAWINGS

Fig. 1 illustrates schematically a context in which embodiments are implemented;
Fig. 2 illustrates schematically an example of partitioning undergone by a picture of pixels of an original video;
Fig. 3 depicts schematically a method for encoding a video stream;
Fig. 4 depicts schematically a method for decoding an encoded video stream;
Fig. 5A illustrates schematically an example of hardware architecture of a processing module able to implement an encoding module or a decoding module in which various aspects and embodiments are implemented;
Fig. 5B illustrates a block diagram of an example of a first system in which various aspects and embodiments are implemented;
Fig. 5C illustrates a block diagram of an example of a second system in which various aspects and embodiments are implemented;
Fig. 6 illustrates schematically a neighbouring template and a reference array of samples used to derive TIMD modes;
Fig. 7A, 7B and 7C illustrates a first embodiment of a modified TIMD tool;

Fig. 8 illustrates a second embodiment of a modified TIMD tool;
Figs. 9, 10 and 11 illustrates a third embodiment of a modified TIMD tool; and,
Fig. 12 illustrates all regular intra prediction modes available for instance in VVC;
Fig. 13 illustrates positive intra prediction modes;
Fig; 14A, 14B and 15 illustrates a fourth embodiment of a modified TIMD tool.

## 5. DETAILED DESCRIPTION

The following examples of embodiments are described in the context of a video format similar to the one produce by ECM (Enhanced compression model) as described in document JVET-AF2025: Algorithm description of Enhanced Compression Model 11 (ECM 11) / Joint Video Experts Team (JVET) of ITU-T SG 16 WP 3 and ISO/IEC JTC 1/SC 29, 32nd Meeting, Hannover, DE, 13-20 October 2023 just called *JVET-AF2025* in the following. However, these embodiments are not limited to the video coding/decoding method corresponding to ECM. These embodiments are, in particular, adapted to various video formats comprising (and derived from) for example VVC (Versatile Video Coding (VVC), ITU-T H.266), HEVC (ISO/IEC 23008-2 - MPEG-H Part 2, High Efficiency Video Coding / ITU-T H.265)), AVC ((ISO/CEI 14496-10), EVC (Essential Video Coding/MPEG-5), AV1, AV2 and VP9. In addition, these embodiments are also adapted to various still picture formats such as JPEG.

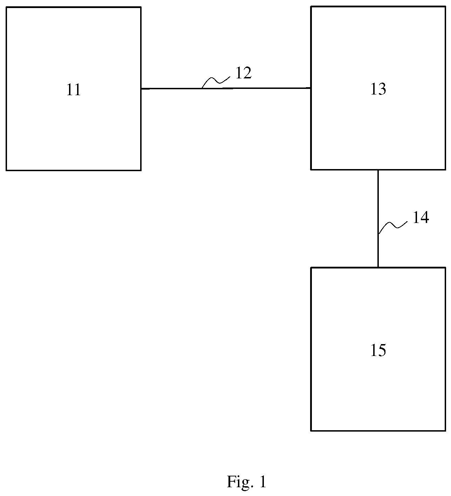

**Fig. 1** illustrates schematically a context in which embodiments are implemented.

In Fig. 1, a system 11, that could be a camera, a storage device, a computer, a server or any device capable of delivering a video stream (i.e., video data), transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures. A post processing may be applied to the decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display system 15 are comprised in a TV, a computer, a tablet, a smartphone, a head-mounted display, etc.

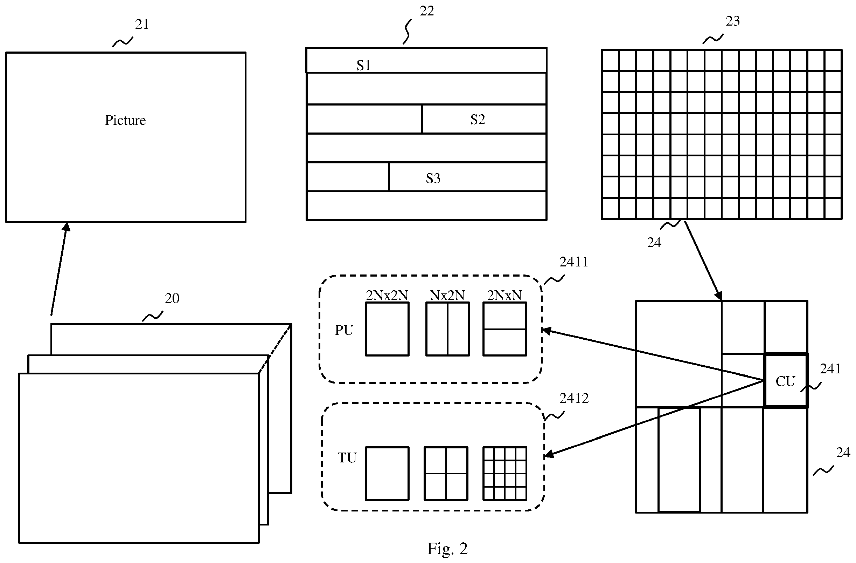

Figs. 2, 3 and 4 introduce an example of video format.

**Fig. 2** illustrates an example of partitioning undergone by a picture of pixels 21 of an original video sequence 20. It is considered here that a pixel is composed of three components: a luminance component and two chrominance components. Other types of pixels are however possible comprising less or more components such as only a luminance component or an additional depth component or transparency component.

A picture is divided into a plurality of coding entities. First, as represented by reference 23 in Fig. 2, a picture is divided in a grid of blocks called *coding tree units* (CTU). A CTU consists of an $N \times N$ block of luminance samples together with two corresponding blocks of chrominance samples. $N$ is generally a power of two having a maximum value of "128" for example. Second, a picture is divided into one or more groups of CTU. For example, it can be divided into one or more tile rows and tile columns, a *tile* being a sequence of CTUs covering a rectangular region of a picture. In some cases, a tile could be divided into one or more *bricks,* each of which consisting of at least one row of CTUs within the tile. Above the concept of tiles and bricks, another encoding entity, called *slice,* exists, that can contain at least one tile of a picture or at least one brick of a tile.

In the example of Fig. 2, as represented by reference 22, the picture 21 is divided into three slices S1, S2 and S3 of the raster-scan slice mode, each comprising a plurality of tiles (not represented), each tile comprising only one brick.

As represented by reference 24 in Fig. 2, a CTU may be partitioned into the form of a hierarchical tree of one or more sub-blocks called *coding units* (CU). The CTU is the root *(i.e.* the parent node) of the hierarchical tree and can be partitioned in a plurality of CUs *(i.e.* child nodes). Each CU becomes a leaf of the hierarchical tree if it is not further partitioned in smaller CUs, or becomes a parent node of smaller CUs *(i.e.* child nodes) if it is further partitioned.

In the example of Fig. 2, the CTU 24 is first partitioned in "4" square CUs using a quadtree type partitioning. The upper left CU is a leaf of the hierarchical tree since it is not further partitioned, *i.e.,* it is not a parent node of any other CU. The upper right CU is further partitioned in "4" smaller square CUs using again a quadtree type partitioning. The bottom right CU is vertically partitioned in "2" rectangular CUs using a binary tree type partitioning. The bottom left CU is vertically partitioned in "3" rectangular CUs using a ternary tree type partitioning.

During the coding of a picture, the partitioning is adaptive, each CTU being partitioned so as to optimize a compression efficiency of the CTU criterion.

In HEVC the concept of prediction unit (PU) and transform unit (TU) were also introduced. Indeed, in HEVC, the coding entities that are used for prediction *(i.e.,* a PU) and transform *(i.e.* a TU) can be different subdivisions of a CU. For example, as represented in Fig. 2, a CU of size $2N \times 2N,$ can be divided in PUs 2411 of size $N \times 2N$ or of size $2N \times N$. In addition, said CU can be divided in "4" TUs 2412 of size $N \times N$ or in "16" TUs of size $\left(\frac{N}{2}\right) \times \left(\frac{N}{2}\right)$. The TUs are always of square shapes.

One can note that in VVC, except in some particular cases, boundaries of the TU and PU are aligned on those of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

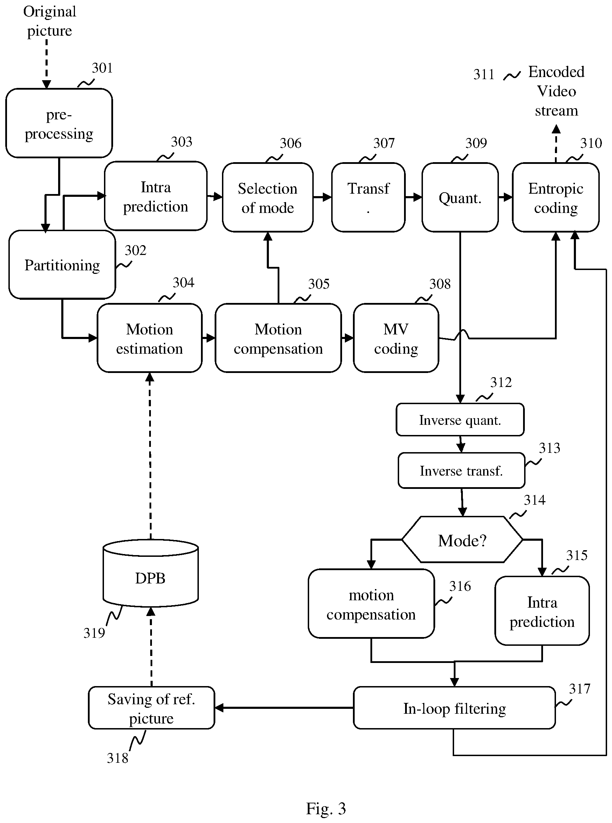

**Fig. 3** depicts schematically a method for encoding a video stream executed by an encoding module. For instance, the method for encoding of Fig. 3 is executed by the system 11. Variations of this method for encoding are contemplated, but the method for encoding of Fig. 3 is described below for purposes of clarity without describing all expected variations.

Before being encoded, a current original picture of an original video sequence may go through a preprocessing. For example, in a step 301, a color transform is applied to the current original picture (e.g., conversion from RGB 4:4:4 to YCbCr 4:2:0), or a remapping is applied to the current original picture components in order to get a signal distribution more resilient to compression (for instance using a histogram equalization of one of the color components). Pictures obtained by preprocessing are called pre-processed pictures in the following.

The encoding of a pre-processed picture begins with a partitioning of the pre-processed picture during a step 302, as described in relation to Fig. 2. The pre-processed picture is thus partitioned into CTU, CU, PU, TU, etc.

For each block, the encoding module determines then a coding mode between an intra prediction mode and an inter prediction mode.

Intra prediction aims at exploiting spatial redundancies in a picture. In a step 303, a current block (i.e. a PU or CU) is spatially predicted from samples of causal neighbour blocks in the same picture, i.e., the blocks on the top and top-right, the blocks on the left and left-bottom, and the top-left block. The encoder constructs a plurality of predictor blocks for the current block from these samples and chooses the one that leads to the best rate-distortion (RD) performance. In recent video compression methods, up to "67" intra prediction modes leading to "67" predictor blocks are constructed. The plurality of predictor blocks comprises a planar mode (indexed as mode 0), a DC mode (indexed as mode "1") and the remaining "65" are angular modes. The planar and DC modes aim to model slow changing intensity regions whereas the angular modes are designed to model directional structures present in pictures. The best prediction mode is encoded and transmitted to the decoder so that the decoder constructs the same intra predictor block for the current block.

To keep the decoder complexity low, the intra prediction uses generally only one row of reference pixels on top and one column of reference pixels on left of the current block. Though the encoder has the option of choosing among three sets of reference lines in a mode called *multiple reference lines* (MRL), the prediction is always based on one reference line that consists of one row on top and one column on left. Because of this limitation, the amount of information contained in the reference pixels is quite limited and thus the intra prediction efficiency, which is based on the correlation between the current block's samples and the reference samples, is also limited. More recently, a proposal for using up to two adjacent reference lines has been proposed. In this case, the predictor is constructed as a weighted average of the two predictors each based on a single reference line.

The above intra prediction modes are forward prediction tools, that is, the intra prediction methods used at the encoder is explicitly signalled to the decoder. Many tools employing backward estimation (that is, the prediction modes are estimated using already decoded causal samples in a picture) were recently proposed. Decoder Side Intra mode Derivation (DIMD), Template based Intra Mode Derivation and Fusion (TIMD) and Spatial Geometric Partition Mode (SGPM) all employ backward estimation methods to estimate multiple prediction modes for a block. The encoder uses the minimum amount of signalling to indicate which modes are employed and, if necessary, to perform a blending of the multiple predictions corresponding to the multiple prediction modes. The underlying assumption behind these methods is that not all parts of a block have the same directionality and therefore using multiple predictions and then blending those predictions can result in better predictions. Estimating these modes in the backward fashion eliminates the need of transmitting multiple prediction modes that can entail significant overhead. The assumption seems to be reasonable for larger blocks as the natural imagery can contain varying directionality of object structures.

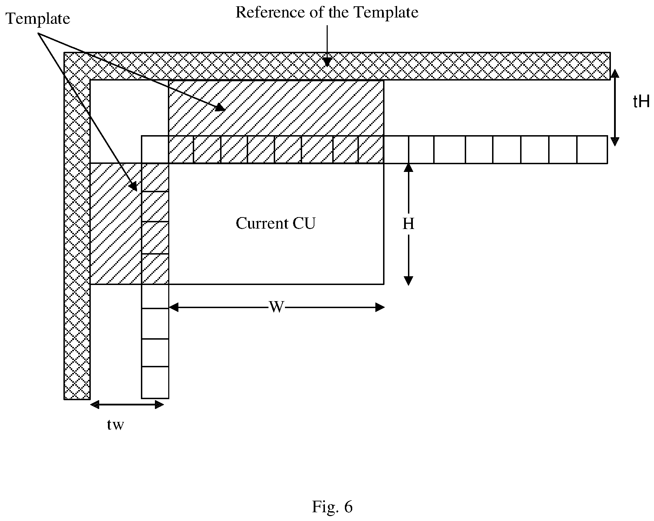

In TIMD, instead of signalling an intra mode for a current block explicitly using a list of most probable modes (MPMs), the information is derived at both the encoder and the decoder from the neighbouring reconstructed samples of the current block. A template (indicated by a patterned region in Fig. 6) specifies a set of already reconstructed samples, which are used to derive the intra mode. The template size is denoted as the number of samples within the template that extends to the above and to the left of the current block. For example, a template size of "2" (i.e., tW = 2 or tH = 2) is used for 4x4 and 8x8 blocks and a template size of "4" (i.e., tW=4 or tH=4) is used for 16x16 and larger blocks. In cases, when the left (respectively the top) neighbour block of the current block is not available, the template consists of only the patterned region on top (respectively on left) of the current block.

For each intra prediction mode in an MPM list, the decoder computes a prediction from a reference of the template (indicated in Fig. 6), i.e., from a reference array of reconstructed samples. For each prediction, a Sum of Absolute Transformed Differences (SATD) between the prediction and the original reconstructed samples of the template is calculated. In a first step, two initial intra prediction modes corresponding to the minimum SATD are selected. The first initial intra prediction mode with the lowest SATD is denoted $INIT\_IPM_{timd\_1st}$ and the initial intra prediction mode corresponding to the second lowest SATD is denoted $INIT\_IPM_{timd\_2nd}$. In a second step, these two initial intra prediction modes are refined. For each of these two intra prediction modes, if the initial intra prediction mode is neither planar nor DC, a SATD is computed for the two closest extended directional intra prediction modes (i.e., the two closest prediction directions at sample resolution of (1/64)) of the initial intra prediction mode). Two sets each comprising an initial intra prediction mode (resulting from the first step) and two refined intra prediction modes resulting from the refinement are therefore obtained. In each set, the intra prediction mode minimizing the SATD is selected. The intra prediction mode derived from the mode $INIT\_IPM_{timd\_1st}$ is denoted $IPM_{timd\_1st}$ and called *primary TIMD mode* and the intra prediction mode derived from the mode $INIT\_IPM_{timd\_2nd}$ is denoted $IPM_{timd\_2nd}$ and called secondary TIMD mode. Thus, for TIMD, the set of directional intra prediction modes is extended from 65 to 129, by increasing the angle resolution to (1/64). If the SATD of the selected two intra prediction modes satisfies the condition that $SATD_{IPM\_timd\_2nd} < 2 * SATD_{IPM\_timd\_1st}$, the predictions of the current block obtained with these two intra prediction modes are blended together with weights to get a final prediction for the current block. The first prediction is obtained with the first reference line (the top and left reference arrays closest to a target block) whereas the second prediction is obtained with the second reference line (the top and left reference arrays next to the closest). The weights are determined from relative magnitudes of the associated SATDs. Otherwise (

$$SATD_{IPM\_timd\_2nd} \geq 2 * SATD_{IPM_{timd1st}}$$

), only the first intra prediction mode $IPM_{timd\_1st}$ is used for the prediction of the current block as the TIMD mode. A weighted MRL prediction with $IPM_{timd\_1st}$ using the first two reference lines, is obtained. TIMD prediction is also tested with other reference lines besides the first reference line where up to two more reference lines (reference lines with indices "1"(the closest reference line) and "3" (the third closest reference line) are considered. In each case, if blending is possible, then $IPM_{timd\_1st}$ is used for prediction with reference line "n" (the $n^{th}$ closest) and $IPM_{timd\_2nd}$ is used for prediction with reference line "n+1" (the $(n + 1)^{th}$ closest). If blending is not possible, then a weighted MRL prediction with $IPM_{timd\_1st}$ using the reference lines n and (n+1) is used. A dedicated flag called *timdFlag* is signaled to indicate if the best prediction, in RD sense, was obtained with the TIMD tool.

If the flag *timdFlag* is "1", then it derives the two TIMD modes $IPM_{timd\_1st}$ and $IPM_{timd\_2nd}$ exactly in the same manner as the encoder. Then, using the same SATD condition mentioned above, it decides to blend the two predictions or not. If the blending is performed, the blending weights are the same as used by the encoder. If *timdFlag* is decoded to be "0", then the decoder does not derive the TIMD modes.

The inter prediction consists in predicting the pixels of a current block from a block of pixels, referred to as the reference block, of a picture preceding or following the current picture, this picture being referred to as the reference picture. During the coding of a current block in accordance with the inter prediction method, a block of the reference picture closest, in accordance with a similarity criterion, to the current block is determined by a motion estimation step 304. During step 304, a motion vector indicating the position of the reference block in the reference picture is determined. Said motion vector is used during a motion compensation step 305 during which a residual block is calculated in the form of a difference between the current block and the reference block. In first video compression standards, the monodirectional inter prediction mode described above was the only inter mode available. As video compression standards evolve, the family of inter modes has grown significantly and comprises now many different inter modes.

During a selection step 306, the prediction mode optimising the compression performances, in accordance with a rate/distortion optimization criterion (i.e. RDO criterion), among the prediction modes tested (Intra prediction modes, Inter prediction modes), is selected by the encoding module.

When the prediction mode is selected, the residual block is transformed during a step 307. The transformed block is then quantized during a step 309.

Note that the encoding module can skip the transform and apply quantization directly to the non-transformed residual signal. When the current block is coded according to an intra prediction mode, information indicating the selected intra prediction mode are encoded by an entropy encoder during a step 310. When the current block is encoded according to an inter prediction, when appropriate, a motion vector of the block is predicted from a prediction vector selected from a set of motion vector predictors derived from reconstructed blocks situated in a spatial and temporal vicinity of the block to be encoded. The motion information is next encoded by the entropy encoder during step 310 in the form of a motion residual and an index for identifying the prediction vector. The transformed and quantized residual block is encoded by the entropy encoder during step 310.

Note that the encoding module can bypass both transform and quantization, *i.e.,* the entropy encoding is applied on the residual without the application of the transform or quantization processes. The result of the entropy encoding is inserted in an encoded video stream (i.e. in video data) 311.

Metadata such as SEI (supplemental enhancement information) messages can be attached to the encoded video stream 311. A SEI message as defined for example in standards such as AVC, HEVC or VVC (or in standard Versatile supplemental enhancement information (VSEI) messages for coded video bitstreams - H.274) is a data container or a syntax structure associated to a video stream and comprising metadata providing information relative to the video stream.

After the quantization step 309, the current block is reconstructed so that the pixels corresponding to that block can be used for future predictions. This reconstruction phase is also referred to as a *prediction loop.* An inverse quantization is therefore applied to the transformed and quantized residual block during a step 312 and an inverse transformation is applied during a step 313. According to the prediction mode used for the block obtained during a step 314, the predictor block of the block is reconstructed. If the current block is encoded according to an inter prediction mode, the encoding module applies, when appropriate, during a step 316, a motion compensation using the motion vector of the current block in order to identify the reference block of the current block. If the current block is encoded according to an intra prediction mode, during a step 315, the intra prediction mode selected for the current block is used for reconstructing the predictor block of the current block. The predictor block and the reconstructed residual block are added in order to obtain the reconstructed current block.

Following the reconstruction, an in-loop filtering intended to reduce the encoding artefacts is applied, during a step 317, to the reconstructed block. This filtering is called *in-loop filtering* since this filtering occurs in the prediction loop to obtain at the decoder the same reference pictures as the encoder and thus avoid a drift between the encoding and the decoding processes. In-loop filtering tools comprises deblocking filtering, SAO (Sample adaptive Offset) and ALF (Adaptive Loop Filtering).

When a block is reconstructed, it is inserted during a step 318 into a reconstructed picture stored in a memory 319 of reconstructed pictures generally called Decoded Picture Buffer (DPB). The reconstructed pictures thus stored can then serve as reference pictures for other pictures to be coded.

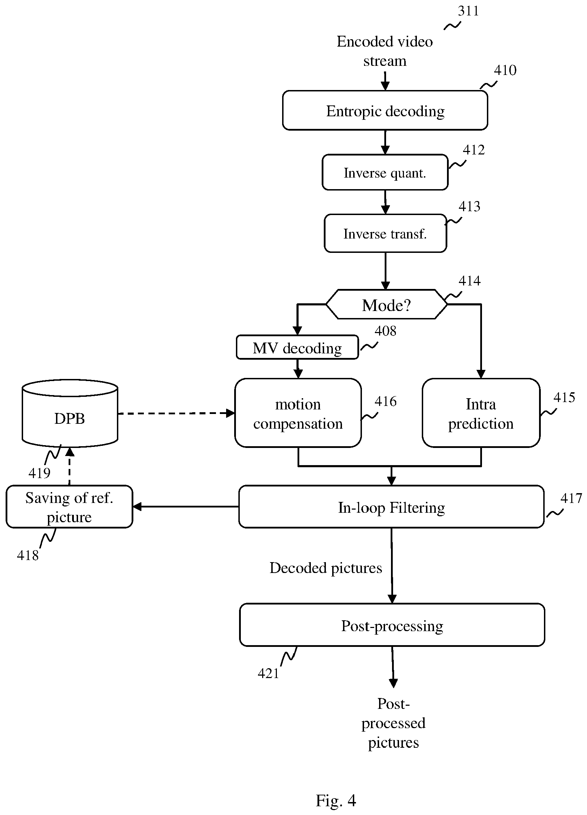

**Fig. 4** depicts schematically a method for decoding the encoded video stream (i.e. the video data) 311 encoded according to method described in relation to Fig. 3 executed by a decoding module. For instance, the method for decoding of Fig. 4 is executed by the system 13. Variations of this method for decoding are contemplated, but the method for decoding of Fig. 4 is described below for purposes of clarity without describing all expected variations.

The decoding is done block by block. For a current block, it starts with an entropic decoding of the current block during a step 410. Entropic decoding allows to obtain, at least, the prediction mode of the block.

If the block has been encoded according to an inter prediction mode, the entropy decoding allows to obtain, when appropriate, a motion vector predictor index, a motion residual and a prediction residual block. During a step 408, a motion vector is reconstructed for the current block using the prediction vector index and the motion residual.

If the block has been encoded according to an intra prediction mode, entropy decoding allows, when appropriate, to obtain a prediction mode and a prediction residual block. Steps 412, 413, 414, 415, 416 and 417 implemented by the decoding module are in all respects identical respectively to steps 312, 313, 314, 315, 316 and 317 implemented by the encoding module.

Decoded blocks are saved in decoded pictures and the decoded pictures are stored in a DPB 419 in a step 418. When the decoding module decodes a given picture, the pictures stored in the DPB 419 are identical to the pictures stored in the DPB 319 by the encoding module during the encoding of said given picture. The decoded picture can also be sent as output by the decoding module for instance to be displayed.

Following the in-loop filtering (i.e., following the generation of the decoded pictures), a post-processing step 421 may be applied.

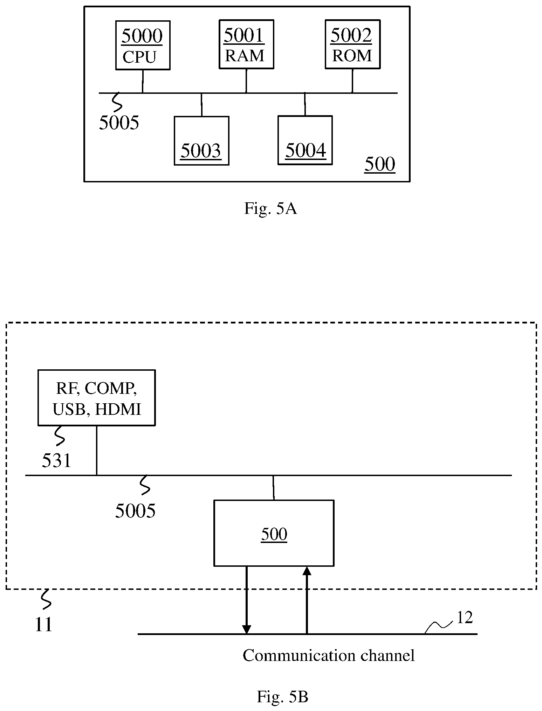

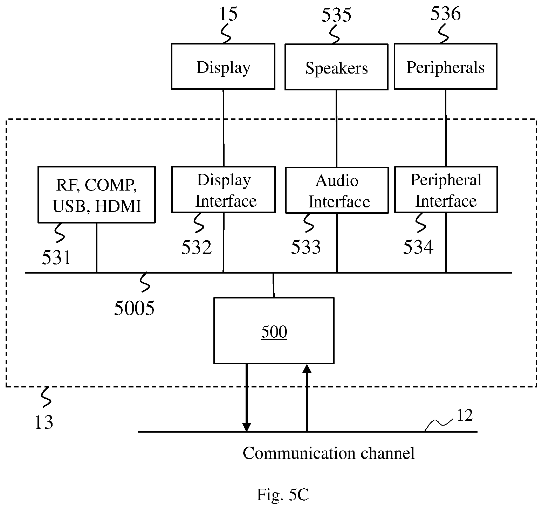

Fig. 5A, 5B and 5C describes examples of device, apparatus and/or system allowing implementing the various embodiments.

**Fig. 5A** illustrates schematically an example of hardware architecture of a processing module 500 able to implement an encoding module or a decoding module capable of implementing respectively a method for encoding of Fig. 3 and a method for decoding of Fig. 4 modified according to different aspects and embodiments. The encoding module is for example comprised in the system 11 when this system is in charge of encoding the video stream. The decoding module is for example comprised in the system 13.

The processing module 500 comprises, connected by a communication bus 5005: a processor or CPU (central processing unit) 5000 encompassing one or more microprocessors, general purpose computers, special purpose computers, and processors based on a multi-core architecture, as non-limiting examples; a random access memory (RAM) 5001; a read only memory (ROM) 5002; a storage unit 5003, which can include nonvolatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 5004 for exchanging data with other modules, devices or system. The communication interface 5004 can include, but is not limited to, a transceiver configured to transmit and to receive data over a communication channel. The communication interface 5004 can include, but is not limited to, a modem or network card.

If the processing module 500 implements a decoding module, the communication interface 5004 enables for instance the processing module 500 to receive encoded video streams and to provide a sequence of decoded pictures. If the processing module 500 implements an encoding module, the communication interface 5004 enables for instance the processing module 500 to receive a sequence of original picture data to encode and to provide an encoded video stream.

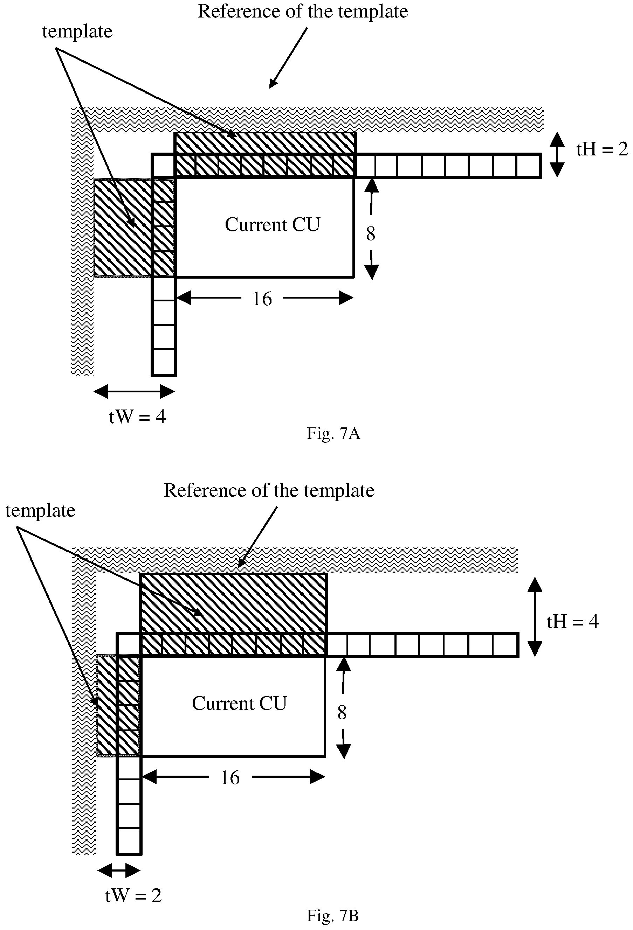

The processor 5000 is capable of executing instructions loaded into the RAM 5001 from the ROM 5002, from an external memory (not shown), from a storage medium, or from a communication network. When the processing module 500 is powered up, the processor 5000 is capable of reading instructions from the RAM 5001 and executing them. These instructions form a computer program causing, for example, the implementation by the processor 5000 of a decoding method as described in relation with Fig. 4 and/or an encoding method described in relation to Fig. 3, and methods illustrated in relation to Figs. 7A, 7B, 7C, 8, 9, 10, 11, 12, 13, 14A, 14B and 15, these methods comprising various aspects and embodiments described below in this document.

All or some of the algorithms and steps of the methods of Figs. 3, 4 and 7A, 7B, 7C, 8, 9, 10, 11, 12, 13, 14A, 14B and 15 may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

As can be seen, microprocessors, general purpose computers, special purpose computers, processors based or not on a multi-core architecture, DSP, microcontroller, FPGA and ASIC are electronic circuitry adapted or configured to implement at least partially the methods of Figs. 3, 4, 7A, 7B, 7C, 8, 9, 10, 11, 12, 13, 14A, 14B and 15.

**Fig. 5C** illustrates a block diagram of an example of the system 13 in which various aspects and embodiments are implemented. The system 13 can be embodied as a device including the various components described below and is configured to perform one or more of the aspects and embodiments described in this document. Examples of such devices include, but are not limited to, various electronic devices such as personal computers, laptop computers, smartphones, tablet computers, digital multimedia set top boxes, digital television receivers, personal video recording systems, connected home appliances and head mounted display. Elements of system 13, singly or in combination, can be embodied in a single integrated circuit (IC), multiple ICs, and/or discrete components. For example, in at least one embodiment, the system 13 comprises one processing module 500 that implements a decoding module. In various embodiments, the system 13 is communicatively coupled to one or more other systems, or other electronic devices, via, for example, a communications bus or through dedicated input and/or output ports. In various embodiments, the system 13 is configured to implement one or more of the aspects described in this document.

The input to the processing module 500 can be provided through various input modules as indicated in block 531. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 5C, include composite video.

In various embodiments, the input modules of block 531 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF module and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system 13 to other electronic devices across USB and/or HDMI connections. It is to be understood that various aspects of input processing, for example, Reed-Solomon error correction, can be implemented, for example, within a separate input processing IC or within the processing module 500 as necessary. Similarly, aspects of USB or HDMI interface processing can be implemented within separate interface ICs or within the processing module 500 as necessary. The demodulated, error corrected, and demultiplexed stream is provided to the processing module 500.

Various elements of system 13 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 13, the processing module 500 is interconnected to other elements of said system 13 by the bus 5005.

The communication interface 5004 of the processing module 500 allows the system 13 to communicate on the communication channel 12. As already mentioned above, the communication channel 12 can be implemented, for example, within a wired and/or a wireless medium.

Data is streamed, or otherwise provided, to the system 13, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 13 using the RF connection of the input block 531. As indicated above, various embodiments provide data in a non-streaming manner. Additionally, various embodiments use wireless networks other than Wi-Fi, for example a cellular network or a Bluetooth network.

The system 13 can provide an output signal to various output devices, including the display system 15, speakers 535, and other peripheral devices 536. The display system 15 of various embodiments includes one or more of, for example, a touchscreen display, an organic light-emitting diode (OLED) display, a curved display, and/or a foldable display. The display system 15 can be for a television, a tablet, a laptop, a cell phone (mobile phone), ahead mounted display or other devices. The display system 15 can also be integrated with other components (for example, as in a smart phone), or separate (for example, an external monitor for a laptop). The other peripheral devices 536 include, in various examples of embodiments, one or more of a stand-alone digital video disc (or digital versatile disc) (DVR, for both terms), a disk player, a stereo system, and/or a lighting system. Various embodiments use one or more peripheral devices 536 that provide a function based on the output of the system 13. For example, a disk player performs the function of playing an output of the system 13.

In various embodiments, control signals are communicated between the system 13 and the display system 15, speakers 535, or other peripheral devices 536 using signaling such as AV.Link, Consumer Electronics Control (CEC), or other communications protocols that enable device-to-device control with or without user intervention. The output devices can be communicatively coupled to system 13 via dedicated connections through respective interfaces 532, 533, and 534. Alternatively, the output devices can be connected to system 13 using the communications channel 12 via the communications interface 5004 or a dedicated communication channel corresponding to the communication channel 12 in Fig. 5C via the communication interface 5004. The display system 15 and speakers 535 can be integrated in a single unit with the other components of system 13 in an electronic device such as, for example, a television. In various embodiments, the display interface 532 includes a display driver, such as, for example, a timing controller (T Con) chip.

The display system 15 and speaker 535 can alternatively be separate from one or more of the other components. In various embodiments in which the display system 15 and speakers 535 are external components, the output signal can be provided via dedicated output connections, including, for example, HDMI ports, USB ports, or COMP outputs.

**Fig. 5B** illustrates a block diagram of an example of the system 11 in which various aspects and embodiments are implemented. System 11 is very similar to system 13. The system 11 can be embodied as a device including the various components described below and is configured to perform one or more of the aspects and embodiments described in this document. Examples of such devices include, but are not limited to, various electronic devices such as personal computers, laptop computers, smartphones, tablet computers, a camera and a server. Elements of system 11, singly or in combination, can be embodied in a single integrated circuit (IC), multiple ICs, and/or discrete components. For example, in at least one embodiment, the system 11 comprises one processing module 500 that implements an encoding module. In various embodiments, the system 11 is communicatively coupled to one or more other systems, or other electronic devices, via, for example, a communications bus or through dedicated input and/or output ports. In various embodiments, the system 11 is configured to implement one or more of the aspects described in this document.

The input to the processing module 500 can be provided through various input modules as indicated in block 531 already described in relation to Fig. 5C.

Various elements of system 11 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 11, the processing module 500 is interconnected to other elements of said system 11 by the bus 5005.

The communication interface 5004 of the processing module 500 allows the system 11 to communicate on the communication channel 12.

Data is streamed, or otherwise provided, to the system 11, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 11 using the RF connection of the input block 531.

As indicated above, various embodiments provide data in a non-streaming manner. Additionally, various embodiments use wireless networks other than Wi-Fi, for example a cellular network or a Bluetooth network.

The data provided to the system 11 can be provided in different format. In various embodiments these data are encoded and compliant with a known video compression format such as AV1, VP9, VVC, HEVC, AVC, etc. In various embodiments, these data are raw data provided for example by a picture and/or audio acquisition module connected to the system 11 or comprised in the system 11. In that case, the processing module 500 take in charge the encoding of these data.

The system 11 can provide an output signal to various output devices capable of storing and/or decoding the output signal such as the system 13.

Various implementations involve decoding. "Decoding", as used in this application, can encompass all or part of the processes performed, for example, on a received encoded video stream in order to produce a final output suitable for display. In various embodiments, such processes include one or more of the processes typically performed by a decoder, for example, entropy decoding, inverse quantization, inverse transformation, and prediction. In various embodiments, such processes also, or alternatively, include processes performed by a decoder of various implementations described in this application, for example, for applying a modified TIMD tool according to various embodiments.

Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded video stream. In various embodiments, such processes include one or more of the processes typically performed by an encoder, for example, partitioning, prediction, transformation, quantization, and entropy encoding. In various embodiments, such processes also, or alternatively, include processes performed by an encoder of various implementations described in this application, for example, for applying a modified TIMD tool according to various embodiments.

Whether the phrase "encoding process" is intended to refer specifically to a subset of operations or generally to the broader encoding process will be clear based on the context of the specific descriptions and is believed to be well understood by those skilled in the art.

Note that the syntax elements names as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between a rate and a distortion is usually considered. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of a reconstructed signal after coding and decoding. Faster approaches may also be used, to save encoding complexity, in particular with computation of an approximated distortion based on a prediction or a prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of' for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a use of some coding tools. In this way, in an embodiment the same parameters can be used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can include a signal indicating a selected intra prediction mode. Such a signal can be formatted, for example, as an electromagnetic wave (for example, using a radio frequency portion of spectrum) or as a baseband signal. The formatting can include, for example, encoding an encoded video stream and modulating a carrier with the encoded video stream. The information that the signal carries can be, for example, analog or digital information. The signal can be transmitted over a variety of different wired or wireless links, as is known. The signal can be stored on a processor-readable medium.

In the following embodiment, we present several improvements to the TIMD tool.

First embodiment: Template Size Change

The size of the template used in TIMD is a crucial element for the accuracy of the TIMD modes. If the template width and height are large, then estimated modes can be completely uncorrelated to the best prediction mode of a target block, as the template would contain decoded samples which are far from the target block samples. On the contrary, if the template width and height are small, the estimated modes can be quite erroneous as multiple candidate modes would produce the same minimum SATD score. Therefore the template size needs to be selected judiciously. In some implementations of the TIMD mode, the template width is "2" (i.e., $tW = 2$) if the target block width is "4" or "8", otherwise (i.e., if the target block width is "16" or greater) the template width is "4". Similarly, the template height is "2" (i.e., $tH = 2$) if the target block height is "4" or "8", otherwise (i.e., if the target block height is "16" or greater) the template height is "4". Thus, the template width and height depend on the target block width and height respectively.

We propose to make the dependence of template width and height on the target block width and height in the other way around. That is, we propose to make the template width dependent on the target block height and the template height dependent on the target block width. The intuition behind this proposal is the simple fact that a larger block width may need more number of template samples on top for higher accuracy. Similarly, a larger block height may need more number of template samples on left for higher accuracy. Thus, as an example, we propose the following. The template width is "2" (i.e., $tW = 2$) if the target block height is "4" or "8", otherwise (i.e., if the target block height is "16" or greater) the template width is "4". Similarly, the template height is "2" (i.e., $tH = 2$) if the target block width is "4" or "8", otherwise (i.e., if the target block width is "16" or greater) the template height is "4". The proposed template size change is illustrated in Figs. 7A and 7B for a 8x16 target block. Fig. 7A shows the template used by current implementations of the TIMD tool; Fig. 7B shows the proposed template.

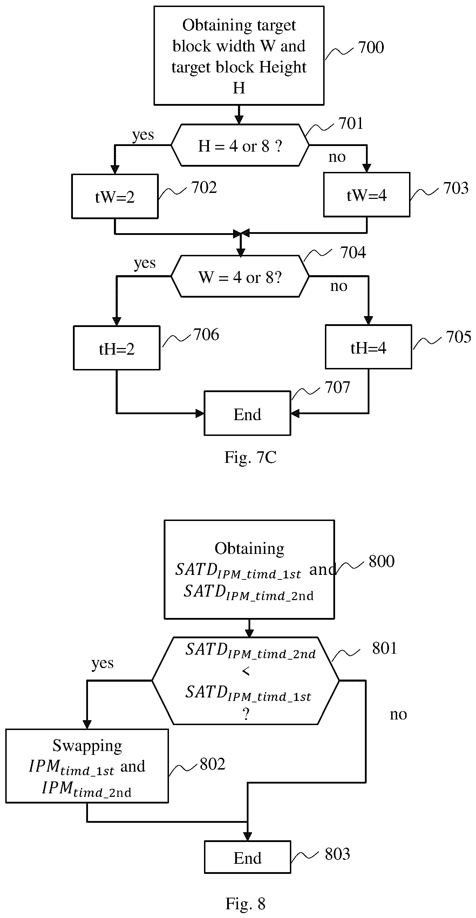

**Fig. 7C** illustrates schematically a process of adaptation of the template size in the TIMD tool according to the first embodiment.

The process of Fig. 7C is executed by the processing module 500 of the system 11 when the system 11 implements an encoder or by the processing module 500 of the system 13 when the system 13 implements a decoder. The encoder is for example the encoder of Fig. 3 with a modified step 303 implementing the process of Fig. 7C. The decoder is for example the decoder of Fig. 4 with a modified step 415 implementing the process of Fig. 7C.

In a step 700, the processing module 500 obtains a target block. During step 700, the processing module 500 obtains a width $W$ and a height $H$ of the target block.

In a step 701, the processing module 500 determines if the height $H$ is equal to "4" or "8".

If the height H is equal to "4" or "8", the processing module 500 continues with a step 702 during which the processing module 500 sets the value of the template width $tW$ to "2". Otherwise, in a step 703, the processing module 500 sets the template width $tW$ to "4". As can be seen, in step 701, 702 and 703, the width of the neighbor template is based on the height of the target block.

Step 702 and 703 are followed by a step 704 during which the processing module 500 determines if the width $W$ is equal to "4" or "8".

If the width $W$ is equal to "4" or "8", the processing module 500 continues with a step 706 during which the processing module 500 sets the value of the template heigh $tH$ to "2". Otherwise, in a step 705, the processing module 500 sets the template width $tH$ to "4". As can be seen, in step 704, 705 and 706, the height of the neighbor template is based on the width of the target block.

The process of Fig. 7C ends in a step 707 and is followed by the usual TIMD process of determination of a primary and a secondary TIMD mode based on a minimization of the SATD and by the determination of a predictor block for the target block based on either the primary and secondary TIMD mode or based on the primary TIMD mode only.

In a variant of the first embodiment, similarly to the template height $tH$ and width $tW,$ the height of the top part of the reference array of samples is also adapted to the block width $W$ and the width of the left part of the reference array of samples is also adapted to the block width $H$. For example, the template width tW and height $tH$ can be selected as follows:

$$tW = 2^{(log_2 H) \gg 1}$$

$$tH = 2^{(log_2 W) \gg 1}$$

Note that, in this design, the template width and height are still powers of 2, which is a requirement for SATD computation.

Second embodiment: TIMD modes reordering.

In the TIMD tool, two intra prediction modes are estimated using a template. One of them is the primary TIMD mode and the other is the secondary TIMD mode. In some implementations, because of the way these two modes are estimated based on the SATD score, the two modes can be identical in some cases. In this case, the prediction of the target block becomes equivalent to a weighted MRL where the weights are "0.5" each. In some other cases, the SATD score produced by the secondary TIMD mode may be lower than that produced by the primary TIMD mode. This last situation may occur when a refined TIMD mode derived from the initial TIMD mode $INIT\_IPM_{timd\_2nd}$ has a lower SATD score than the initial TIMD mode $INIT\_IPM_{timd\_1st}$ and a lower SATD score than each refined TIMD mode derived from the initial TIMD mode $INIT\_IPM_{timd\_1st}$.

In the second embodiment, it is proposed to reorder the TIMD modes as follows. If $SATD_{IPM\_timd\_2nd} < SATD_{IPM\_timd\_1st}$, we swap $IPM_{timd\_1st}$ and $IPM_{timd\_2nd}$.

The final primary and secondary TIMD modes may be estimated by checking the adjacent modes of initial estimates, which are estimated with (1/32) pixel resolution, at resolution (1/64) of a pixel. The motivation for this two-step estimation procedure is to reduce the complexity. There may be cases when the initial two estimates are adjacent modes at resolution (1/32) of a pixel. In this case, the final two TIMD modes can be identical as they are estimated independently around their initial estimates. To avoid these cases, during the estimation, we also use a constraint that the two TIMD modes are not identical.

Fig. 8 illustrates schematically a process according to the second embodiment.

The process of Fig. 8 is executed by the processing module 500 of the system 11 when the system 11 implements an encoder or by the processing module 500 of the system 13 when the system 13 implements a decoder. The encoder is for example the encoder of Fig. 3 with a modified step 303 implementing the process of Fig. 8. The decoder is for example the decoder of Fig. 4 with a modified step 415 implementing the process of Fig. 8.

In a step 800, the processing module 500 obtains a target block and applies the TIMD process to the target block until obtaining the SATD for the primary TIMD mode $IPM_{timd\_1st}$ (i.e., $SATD_{IPM\_timd\_1st}$) and for the secondary TIMD mode $IPM_{timd\_2nd}$ (i.e., $SATD_{IPM\_timd\_1st}$).

In a step 801, the processing module 500 compares the two SATD. If $SATD_{IPM\_timd\_2nd} < SATD_{IPM\_timd\_1st}$, the processing module 500 swaps the primary TIMD mode and the secondary TIMD mode during a step 802. In other words, the primary TIMD mode becomes the secondary TIMD mode and the secondary TIMD mode becomes the primary TIMD mode. Again, in other words, in steps 800, 801 and 802, the processing module 500 defines the TIMD mode with the lowest SATD value among $IPM_{timd\_1st}$ and $IPM_{timd\_2nd}$ as the primary TIMD mode and the other TIMD mode among $IPM_{timd\_1st}$

and $IPM_{timd\_2nd}$ as the secondary TIMD mode.

Otherwise, if $SATD_{IPM\_timd\_2nd} \geq SATD_{IPM\_timd\_1st}$ (or after step 802) the process ends with no swapping of the two TIMD modes in a step 803.

Step 803 is followed by the usual process of TIMD of generating a predictor of the current block either from the primary and secondary TIMD mode or from the primary TIMD mode only. As can be seen, in the second embodiment, the predictor depends on which TIMD mode is the primary TIMD mode and on which TIMD mode is the secondary TIMD mode.

Third embodiment: No wide angle modes in template prediction.

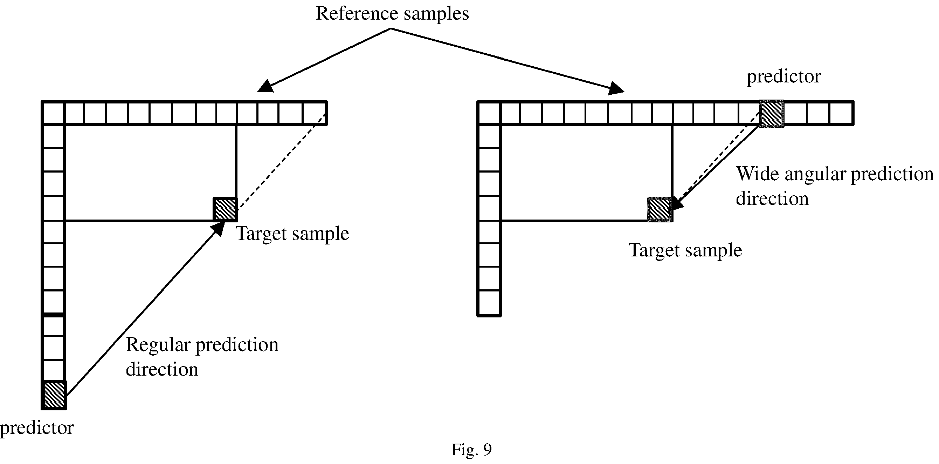

The idea of wide angles in intra prediction is to replace some suitable regular angular modes by wide angular modes in opposite direction if the target block is rectangular. Doing this allows choosing the predictor samples for target samples towards the bottom right corner of the target block from nearer reference samples. This is illustrated in **Fig. 9.** Left part of Fig. 9 illustrates an intra prediction without wide angular modes. The top and left reference arrays are equal and of size H + W + 1. Right part of Fig. 9 represents an intra prediction with wide angular modes. The top and the left reference arrays are of length 2W+1 and 2H+1, respectively. For a rectangular target block, some regular prediction directions are replaced with equivalent number of wide angular directions in the opposite directions. Thus, the wide angle intra prediction tries to improve the prediction accuracy of target samples towards the bottom right part of a target block.

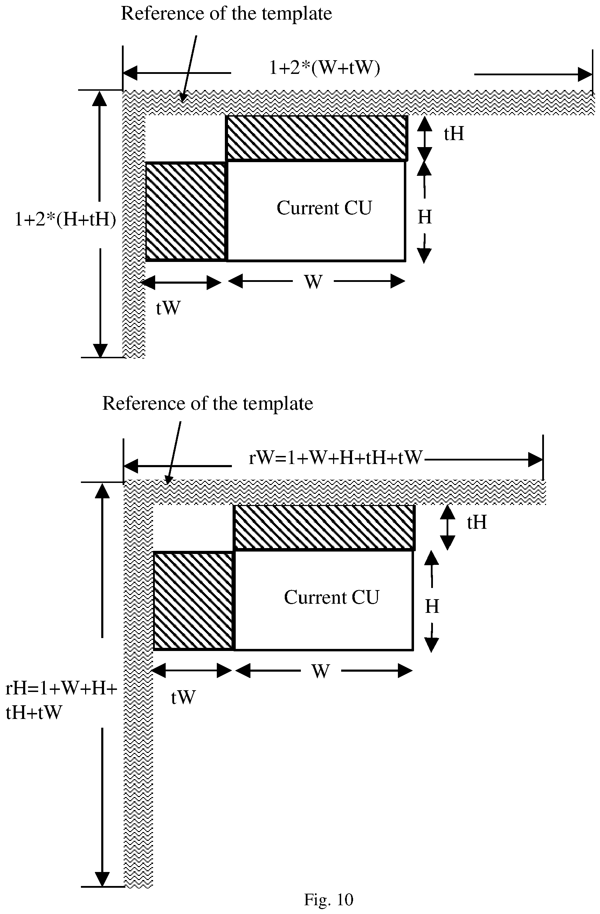

In current implementations of TIMD, the application of the wide angle modes remain unchanged. For a rectangular target block, the candidate intra prediction modes tested for the template prediction by the reference array of samples are mapped to the wide angle modes in the usual manner if they satisfy a wide angle condition for the block size. The wide angle condition is for instance the one detailed in section 3.3.1.2 of document JVET-T2002, Algorithm description for Versatile Video Coding and Test Model 11 (VTM 11), Jianle Chen, Yan Ye, Seung Hwan Kim, Joint Video Experts Team (JVET) of ITU-T SG 16 WP 3 and ISO/IEC JTC 1/SC 2, 20th Meeting, by teleconference, 7 - 16 October 2020. Thus, the template is also predicted with a wide angular direction as the target block would be. But as the template samples are close to the top and left reference arrays for the template, the application of the wide angular prediction for the template is not always justified. Therefore, in the third embodiment, it is proposed to apply the regular angular predictions to the template with the selected candidate intra prediction modes. The lengths of the reference arrays for the template is changed as shown in **Fig. 10.** The top part of Fig. 10 illustrates the template sizes in current implementations of TIMD to support wide angular template prediction. The bottom part of Fig. 10 illustrates template sizes change for template prediction in TIMD without any wide angles. The two modes producing the minimum SATD score as explained before are selected as the primary and the secondary TIMD modes. In the prediction of the target block using these modes, the wide angular prediction is applied as usual. That is, if any of the two selected modes satisfies the wide angle condition for the block size, then the mode is replaced by a wide angular mode for obtaining the prediction for the mode.

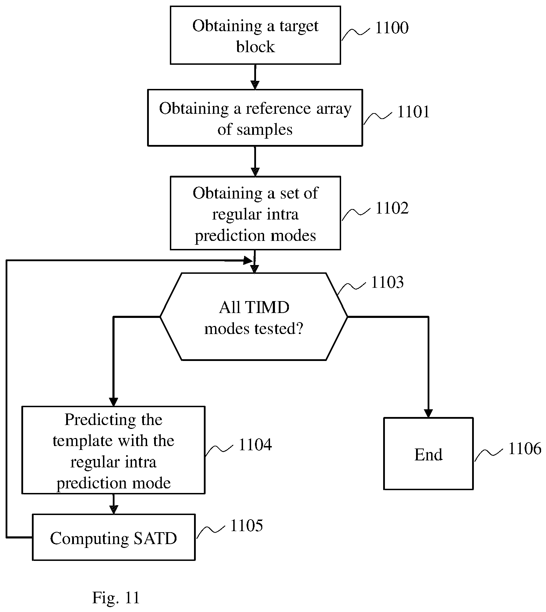

**Fig. 11** illustrates schematically a process according to the third embodiment.

The process of Fig. 11 is executed by the processing module 500 of the system 11 when the system 11 implements an encoder or by the processing module 500 of the system 13 when the system 13 implements a decoder. The encoder is for example the encoder of Fig. 3 with a modified step 303 implementing the process of Fig. 11. The decoder is for example the decoder of Fig. 4 with a modified step 415 implementing the process of Fig. 11.

In a step 1100, the processing module 500 obtains a target block and a template in a reconstructed neighborhood of the target block.

Inn a step 1101, the processing module 500 obtains a reference array of samples in the neighborhood of the neighbor template. In this reference array of samples, the left part of the reference array depends at least on the width and the height of the target block and the top part of the reference array depends at least on the width W and the height H of the target block. In addition, both top and left parts of the reference array depend on the template height $tH$ and on the template width $tW$. More precisely, the height of the reference array $rH$ on the left of the target block is equal for example to $rH=1+W+H+tH+tW$ and the width of the reference array $rW$ on the top of the target block is equal for example to $rW=1+W+H+tH+tw$. Other values are possible for the height $rH$ and for the width $rW$ of the reference array provided that they both depend at least on $W$ and $H$.

In a step 1102, the processing module 500 obtains a set of regular intra prediction modes. This set constitutes the set of possible TIMD modes of the third embodiment and doesn't comprise any wide angular mode.

In a step 1103, the processing module 500 determines if all TIMD mode of the set of TIMD modes had been tested.

If no, in a step 1104, the processing module 500 extracts a current TIMD mode not already tested from the set of TIMD modes and predicts the template from the reference array of samples defined in step 1101 using the current TIMD mode.

In a step 1105, the processing module 500 computes the SATD between the prediction of the reference template obtained in step 1104 and the reference template.

If all TIMD mode had been tested, the process of Fig. 11 ends and is followed by a determination of the two TIMD modes minimizing the SATD to determine the primary and the secondary TIMD modes. Once the primary and the secondary TIMD have been determined, the processing module applies the usual TIMD process to generate a predictor for the current block either from the primary and the secondary TIMD mode or from the primary TIMD mode only.

Fourth embodiment: Template prediction with adjacent reference array.

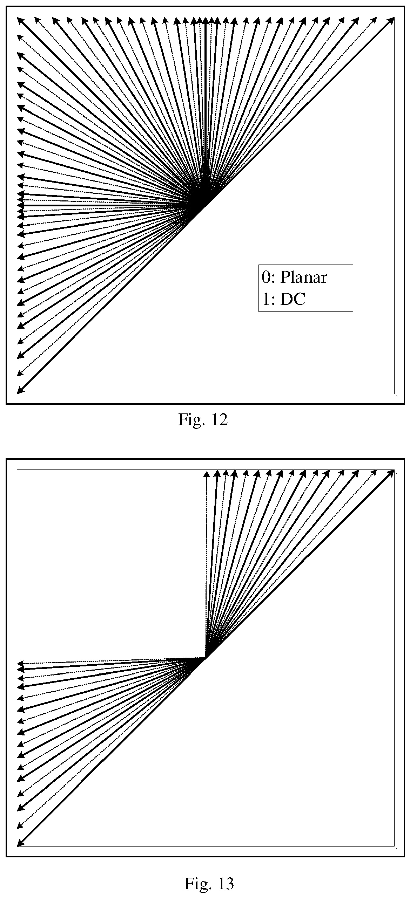

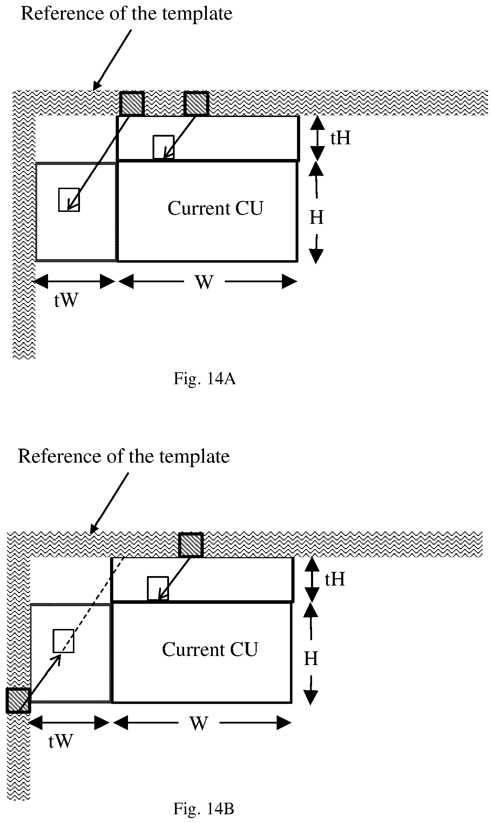

To determine the primary and the secondary TIMD mode, the encoder and the decoder predict a template with the reference array of samples. For a candidate intra prediction mode, the pixels in the two parts of a template, if available, are predicted using the same primary reference array irrespective of the prediction direction. We propose to use different reference arrays for the two parts of the template when the prediction directions are positive. **Fig. 12** represents all regular intra prediction modes available for instance in VVC. **Fig. 13** represents only positive regular intra prediction modes in the set of regular intra prediction modes of Fig. 13. The positive regular intra prediction modes can be divided in a set of *bottom left to top right modes* in the top right part of Fig. 13 and in a set of *top right to bottom left* modes in the bottom left part of Fig. 13. **Fig. 14A** illustrates the usual template prediction process of TIMD. **Fig. 14B** illustrates the modified prediction process of TIMD according to the fourth embodiment. For the top part of the template, we use the top reference array and for the part on the left, we use the left reference array. More generally, in the fourth embodiment, it is considered that the template is divided in two parts: A left part located on the left of the target block and a top part located on the top of the target block. When the left (respectively top) part of the template is predicted from the left part (respectively the top part) of the reference array using a positive intra prediction mode with a first prediction direction, the top part (respectively the left part) of the template is predicted from the top part (respectively the left part) of the reference array using a second prediction direction, the second prediction direction being the opposite of the first prediction direction. The opposite prediction direction is computed from the inverse angle parameter associated with the original prediction direction, and the reference samples in the opposite direction are localized as done in position dependent pixel compensation (PDPC). The intuition behind this approach is that the pixels get predicted with nearer reference samples. For example, for the example shown, a pixel in the left template gets predicted with a nearer predictor sample on the left reference array than a predictor on the top reference array. Thus, it is expected to lead to more accurate TIMD modes.

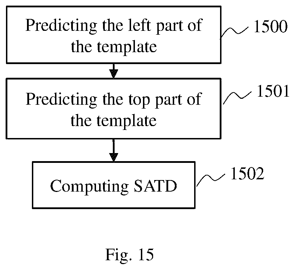

**Fig. 15** illustrates schematically a process according to the fourth embodiment.

The process of Fig. 15 is executed by the processing module 500 of the system 11 when the system 15 implements an encoder or by the processing module 500 of the system 13 when the system 13 implements a decoder. The encoder is for example the encoder of Fig. 3 with a modified step 303 implementing the process of Fig. 15. The decoder is for example the decoder of Fig. 4 with a modified step 415 implementing the process of Fig. 15.

The process of TIMD applied to a target block is unchanged except for the prediction of the template when the candidate TIMD mode is a positive regular intra prediction mode.

Therefore, for a candidate TIMD mode equal to a positive intra prediction mode, the process starts in a step 1500 wherein the left part of the template is predicted from the left part of the reference array using the candidate TIMD mode or an opposite candidate TIMD with a prediction direction opposite to the prediction direction of the candidate TIMD mode. The choice of the candidate TIMD mode or of the opposite TIMD mode depends on whether the TIMD mode is a bottom left to top right prediction mode or a top right to bottom left prediction mode. If the candidate TIMD mode is a bottom left to top right prediction mode, the processing module 500 uses the candidate TIMD mode for predicting the left part of the template from the left part of the reference array. Otherwise, the processing module 500 uses the opposite candidate TIMD mode for predicting the left part of the template from the left part of the reference array.

In a step 1501, the top part of the template is predicted from the top part of the reference array using the candidate TIMD mode or an opposite candidate TIMD with a prediction direction opposite to the prediction direction of the candidate TIMD mode. Again, the choice of the candidate TIMD mode or of the opposite TIMD mode depends on whether the TIMD mode is a bottom left to top right prediction mode or a top right to bottom left prediction mode. Here, if the candidate TIMD mode is a top right to bottom left prediction mode, the processing module 500 uses the candidate TIMD mode for predicting the top part of the template from the top part of the reference array. Otherwise, the processing module 500 uses the opposite candidate TIMD mode for predicting the top part of the template from the top part of the reference array.

In a step 1502, the processing module computes the SATD between the prediction of the template and the template.

We have presented the first, second, third and fourth embodiments independently. However, these four embodiments may be combined. In addition, any combination of two or three of these embodiments are also possible.

Until now, the first, second, third and fourth embodiment improving TIMD are used in place of the regular TIMD tool. In a fifth embodiment, the first, second, third and fourth embodiment are each (or in combination) considered as additional prediction mode that can be used by an encoder and a decoder in addition to other existing modes such as the TIMD tool. The prediction mode offering the best rate distortion performance is selected by the encoder.

In a sixth embodiment, the first, second, third and fourth embodiment are used to provide new candidate TIMD modes in addition to the candidate TIMD modes considered in the usual TIMD process. Then, the two candidates TIMD modes minimizing the SATD are selected as the primary and secondary TIMD modes.

We described above a number of embodiments. Features of these embodiments can be provided alone or in any combination. Further, embodiments can include one or more of the following features, devices, or aspects, alone or in any combination, across various claim categories and types:

- A bitstream or signal that includes one or more of the described syntax elements, or variations thereof.
- Creating and/or transmitting and/or receiving and/or decoding a bitstream or signal that includes one or more of the described syntax elements, or variations thereof.
- A TV, set-top box, cell phone, tablet, or other electronic device that performs at least one of the embodiments described.
- A TV, set-top box, cell phone, tablet, or other electronic device that performs at least one of the embodiments described, and that displays (e.g. using a monitor, screen, or other type of display) a resulting picture.
- A TV, set-top box, cell phone, tablet, or other electronic device that tunes (e.g. using a tuner) a channel to receive a signal including an encoded video stream, and performs at least one of the embodiments described.
- A TV, set-top box, cell phone, tablet, or other electronic device that receives (e.g. using an antenna) a signal over the air that includes an encoded video stream, and performs at least one of the embodiments described.
- A server, camera, cell phone, tablet or other electronic device that transmits (e.g. using an antenna) a signal over the air that includes an encoded video stream, and performs at least one of the embodiments described.
- A server, camera, cell phone, tablet or other electronic device that tunes (e.g. using a tuner) a channel to transmit a signal including an encoded video stream, and performs at least one of the embodiments described.

**Claims**

1. for encoding comprising:

   obtaining (700) a target block;
   obtaining a neighbor template of samples in a reconstructed neighborhood of the target block, a width of the neighbor template being based (701, 702, 703) on a height of the target block and a height of the neighbor template being based (704, 706, 705) on a width of the target block;
   determining a predictor block for the target block based on a minimization of a distortion between a prediction of the neighbor template from a reference array of samples in a reconstructed neighborhood of the neighbor template and the neighbor template.

2. A method for decoding comprising:

   obtaining (700) a target block;
   obtaining a neighbor template of samples in a reconstructed neighborhood of the target block, a width of the neighbor template being based (701, 702, 703) on a height of the target block and a height of the neighbor template being based (704, 706, 705) on a width of the target block;
   determining a predictor block for the target block based on a minimization of a distortion between a prediction of the neighbor template from a reference array of samples in a reconstructed neighborhood of the neighbor template and the neighbor template.

3. The method of claim 1 or 2 wherein a width of the template is equal to two responsive to the height of the target block is four or eight and is equal to four otherwise and a height of the template is equal to two responsive to the width of the target block is four or eight and is equal to four otherwise.

4. A method for encoding comprising:

   obtaining a target block;
   obtaining a neighbor template of samples in a reconstructed neighborhood of the target block;
   obtaining a reference array of reconstructed samples in a neighborhood of the neighbor template;
   determining an initial primary intra prediction mode providing a lowest value of a distortion metric and an initial secondary intra prediction mode providing a second lowest value of the distortion metric, the distortion metric being calculated for each intra prediction mode of a plurality of intra prediction modes between a prediction of the neighbor template from the reference array using the intra prediction mode and the neighbor template;
   forming a first set of derived intra prediction modes by refining the initial primary intra prediction mode and a second set of derived intra prediction modes by refining the initial secondary intra prediction mode;

selecting in each set the derived intra prediction mode minimizing the distortion metric and defining (800, 801, 802) the selected derived intra prediction mode with the lowest value of the distortion metric as a primary intra prediction mode and the other selected derived intra prediction mode as a secondary intra prediction; generating a predictor block for the current block based on comparison of the value of the distortion metric corresponding to the primary intra prediction mode to a function of the value of the distortion metric corresponding to the secondary intra prediction mode.

5. A method for decoding comprising:

obtaining a target block; obtaining a neighbor template of samples in a reconstructed neighborhood of the target block; determining an initial primary intra prediction mode providing a lowest value of a distortion metric and an initial secondary intra prediction mode providing a second lowest value of the distortion metric, the distortion metric being calculated for each intra prediction mode of a plurality of intra prediction mode between a prediction of the neighbor template from the reference array using the intra prediction mode and the neighbor template; forming a first set of derived intra prediction modes by refining the initial primary intra prediction mode and a second set of derived intra prediction modes by refining the initial secondary intra prediction mode; selecting in each set the derived intra prediction mode minimizing the distortion metric and defining (800, 801, 802) the selected derived intra prediction mode with the lowest value of the distortion metric as a primary intra prediction mode and the other selected derived intra prediction mode as a secondary intra prediction; generating a predictor block for the current block based on comparison of the value of the distortion metric corresponding to the primary intra prediction mode to a function of the value of the distortion metric corresponding to the secondary intra prediction mode.

6. A method for encoding comprising:

obtaining (1100) a target block and a neighbor template of samples in a reconstructed neighborhood of the target block; obtaining (1102) a reference array of samples in a reconstructed neighborhood of the neighboring template, a left part and a top part of the reference array depending at least on a width and a height of the target block;

obtaining (1103) a set of regular intra prediction modes; for each regular intra prediction mode of the set:

predicting(1104) the neighboring template from the reference array based on the regular intra prediction mode; and, determining (1105) a value of a distortion metric computed between the prediction of the reference template and the reference template; determining an intra prediction mode of the plurality with a minimum value of the distortion metric as a primary intra prediction mode; and, generating a predictor block of the target block based at least on the primary intra prediction mode.

7. A method for decoding comprising:

obtaining (1100) a target block and a neighbor template of samples in a reconstructed neighborhood of the target block; obtaining (1102) a reference array of samples in a reconstructed neighborhood of the neighboring template, a left part and a top part of the reference array depending at least on a width and a height of the target block; obtaining (1103) a set of regular intra prediction modes; for each regular intra prediction mode of the set:

predicting (1104) the neighboring template from the reference array based on the regular intra prediction mode; and, determining (1105) a value of a distortion metric computed between the prediction of the reference template and the reference template; determining an intra prediction mode of the plurality with a minimum value of the distortion metric as a primary intra prediction mode; and, generating a predictor block of the target block based at least on the primary intra prediction mode.

8. The method of claim 6 or 7 wherein the left part and the top part of the reference array depend also on a width and a height of the reference template.

9. A method for encoding comprising:

obtaining (700) a target block; obtaining a neighbor template of samples in a reconstructed neighborhood of the target block; obtaining an array of reference reconstructed samples in a neighborhood of the reference template;

determining a predictor block for the target block based on a minimization process, the minimization process comprising determining a distortion between a prediction of the neighbor template from the reference array and the neighbor template for each candidate intra prediction mode of a plurality of candidate intra prediction modes, the prediction of the neighbor template comprising generating (1500) a prediction of a first part among a left or a top part of the neighbor template from the reference array using the candidate intra prediction mode and generating (1501) a prediction of second part among the left or top part of the neighbor template from the reference array using an intra prediction mode having a prediction direction opposite to a prediction direction of the candidate intra prediction.

10. A method for decoding comprising:

obtaining (700) a target block;
obtaining a neighbor template of samples in a reconstructed neighborhood of the target block;
obtaining an array of reference samples in a reconstructed neighborhood of the reference template;
determining a predictor block for the target block based on a minimization process, the minimization process comprising determining a distortion between a prediction of the neighbor template from the reference array and the neighbor template for each candidate intra prediction mode of a plurality of candidate intra prediction modes, the prediction of the neighbor template comprising generating (1500) a prediction of a first part among a left or a top part of the neighbor template from the reference array using the candidate intra prediction mode and generating (1501) a prediction of second part among the left or top part of the neighbor template from the reference array using an intra prediction mode having a prediction direction opposite to a prediction direction of the candidate intra prediction.

11. A device comprising electronic circuitry configured for:

obtaining (700) a target block;
obtaining a neighbor template of samples in a reconstructed neighborhood of the target block, a width of the neighbor template being based (701, 702, 703) on a height of the target block and a height of the neighbor template being based (704, 706, 705) on a width of the target block;
determining a predictor block for the target block based on a minimization of a distortion between a prediction of the neighbor template from a reference array of samples in a reconstructed neighborhood of the neighbor template and the neighbor template.

12. A device comprising electronic circuitry configured for:

obtaining a target block;
obtaining a neighbor template of samples in a reconstructed neighborhood of the target block;
obtaining a reference array of reconstructed samples in a neighborhood of the neighbor template;
determining an initial primary intra prediction mode providing a lowest value of a distortion metric and an initial secondary intra prediction mode providing a second lowest value of the distortion metric, the distortion metric being calculated for each intra prediction mode of a plurality of intra prediction modes between a prediction of the neighbor template from the reference array using the intra prediction mode and the neighbor template;
forming a first set of derived intra prediction modes by refining the initial primary intra prediction mode and a second set of derived intra prediction modes by refining the initial secondary intra prediction mode;
selecting in each set the derived intra prediction mode minimizing the distortion metric and defining (800, 801, 802) the selected derived intra prediction mode with the lowest value of the distortion metric as a primary intra prediction mode and the other selected derived intra prediction mode as a secondary intra prediction;
generating a predictor block for the current block based on comparison of the value of the distortion metric corresponding to the primary intra prediction mode to a function of the value of the distortion metric corresponding to the secondary intra prediction mode.

13. A device comprising electronic circuitry configured for:

obtaining (1100) a target block and a neighbor template of samples in a reconstructed neighborhood of the target block;
obtaining (1102) a reference array of samples in a reconstructed neighborhood of the neighboring template, a left part and a top part of the reference array depending at least on a width and a height of the target block;
obtaining (1103) a set of regular intra prediction modes;

for each regular intra prediction mode of the set:

predicting (1104) the neighboring template from the reference array based on the regular intra prediction mode; and,

determining (1105) a value of a distortion metric computed between the prediction of the reference template and the reference template;

determining an intra prediction mode of the plurality with a minimum value of the distortion metric as a primary intra prediction mode; and,

generating a predictor block of the target block based at least on the primary intra prediction mode.

14. A device comprising electronic circuitry configured for:

obtaining (700) a target block;

obtaining a neighbor template of samples in a reconstructed neighborhood of the target block;

obtaining an array of reference reconstructed samples in a neighborhood of the reference template;

determining a predictor block for the target block based on a minimization process, the minimization process comprising determining a distortion between a prediction of the neighbor template from the reference array and the neighbor template for each candidate intra prediction mode of a plurality of candidate intra prediction modes, the prediction of the neighbor template comprising generating (1500) a prediction of a first part among a left or a top part of the neighbor template from the reference array using the candidate intra prediction mode and generating (1501) a prediction of second part among the left or top part of the neighbor template from the reference array using an intra prediction mode having a prediction direction opposite to a prediction direction of the candidate intra prediction.

15. Non-transitory information storage medium storing program code instructions for implementing the method according to any previous claim from claim 1 to 10.

Fig. 1

EP 4 672 740 A1

Fig. 2

Fig. 3

311

Encoded video stream

410

Entropic decoding

412

Inverse quant.

413

Inverse transf.

414

Mode?

408

MV decoding

DPB

419

416

motion compensation

415

Intra prediction

Saving of ref. picture

418

417

In-loop Filtering

Decoded pictures

421

Post-processing

Post-processed pictures

Fig. 4

Fig. 5A

Fig. 5B

15      535      536

Display | Speakers | Peripherals

RF, COMP, USB, HDMI | Display Interface | Audio Interface | Peripheral Interface

531      532      533      534

5005

500

13

12

Communication channel

Fig. 5C

Fig. 6

template

Reference of the template

Current CU

tH = 2

8

16

tW = 4

Fig. 7A

template

Reference of the template

Current CU

tH = 4

8

16

tW = 2

Fig. 7B

Obtaining target block width W and target block Height H — 700

H = 4 or 8 ? — 701

yes → tW=2 — 702

no → tW=4 — 703

W = 4 or 8? — 704

yes → tH=2 — 706

no → tH=4 — 705

End — 707

Fig. 7C

Obtaining $SATD_{IPM\_timd\_1st}$ and $SATD_{IPM\_timd\_2nd}$ — 800

$SATD_{IPM\_timd\_2nd} < SATD_{IPM\_timd\_1st}$ ? — 801

yes → Swapping $IPM_{timd\_1st}$ and $IPM_{timd\_2nd}$ — 802

no

End — 803

Fig. 8

Reference samples

predictor

Wide angular prediction
direction

Target sample

Target sample

Regular prediction
direction

predictor

Fig. 9

EP 4 672 740 A1

30

Reference of the template

1+2*(W+tW)

tH

Current CU

1+2*(H+tH)

H

W

tW

Reference of the template

rW=1+W+H+tH+tW

tH

Current CU

H

W

rH=1+W+H+
tH+tW

tW

Fig. 10

Obtaining a target
block — 1100

Obtaining a reference array
of samples — 1101

Obtaining a set of
regular intra
prediction modes — 1102

All TIMD
modes tested? — 1103

Predicting the
template with the
regular intra
prediction mode — 1104

End — 1106

Computing SATD — 1105

Fig. 11

Fig. 12

Fig. 13

Reference of the template

Fig. 14A

Reference of the template

Fig. 14B

Predicting the left part of the template — 1500

Predicting the top part of the template — 1501

Computing SATD — 1502

Fig. 15

Europäisches Patentamt
European Patent Office
Office européen des brevets

## EUROPEAN SEARCH REPORT

**Application Number**

EP 24 30 6016

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/133245 A1 (OFINNO LLC [US]) 13 July 2023 (2023-07-13) * paragraph [0181] - paragraph [0195] * ----- | 1-3,11, 15 | INV. H04N19/105 H04N19/11 H04N19/176 H04N19/593 |
| A | CAO (QUALCOMM) K ET AL: "EE2-related: Fusion for template-based intra mode derivation", 23. JVET MEETING; 20210707 - 20210716; TELECONFERENCE; (THE JOINT VIDEO EXPLORATION TEAM OF ISO/IEC JTC1/SC29/WG11 AND ITU-T SG.16 ), , no. JVET-W0123 ; m57240 1 July 2021 (2021-07-01), XP030296122, Retrieved from the Internet: URL:https://jvet-experts.org/doc_end_user/ documents/23_Teleconference/wg11/JVET-W012 3-v1.zip JVET-W0123.docx [retrieved on 2021-07-01] * abstract * * Sections 1-2 * ----- | 1-3,11, 15 | |
| A | ANDRIVON (OFINNO) P ET AL: "EE2-related: Test 2.5a and TIMD fusion improvement", 32. JVET MEETING; 20231013 - 20231020; HANNOVER; (THE JOINT VIDEO EXPLORATION TEAM OF ISO/IEC JTC1/SC29/WG11 AND ITU-T SG.16 ), , no. JVET-AF0053 13 October 2023 (2023-10-13), XP030312050, Retrieved from the Internet: URL:https://jvet-experts.org/doc_end_user/ documents/32_Hannover/wg11/JVET-AF0053-v3. zip JVET-AF0053-v2.docx [retrieved on 2023-10-13] * abstract * * Sections 1-2 * ----- -/-- | 1-3,11, 15 | TECHNICAL FIELDS SEARCHED (IPC) H04N |

The present search report has been drawn up for all claims

| Place of search | Date of completion of the search | Examiner |
|---|---|---|
| The Hague | 6 December 2024 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document

EPO FORM 1503 03.82 (P04C01)

**page 1 of 2**

**EUROPEAN SEARCH REPORT**

Europäisches
Patentamt

European
Patent Office

Office européen
des brevets

Application Number

EP 24 30 6016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/187576 A1 (WANG YANG [CN] ET AL) 6 June 2024 (2024-06-06) * paragraph [0407] * ----- | 1-3,11, 15 | |

TECHNICAL FIELDS
SEARCHED       (IPC)

The present search report has been drawn up for all claims

| Place of search | Date of completion of the search | Examiner |
|---|---|---|
| The Hague | 6 December 2024 | Molina Sedgwick, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                         
& : member of the same patent family, corresponding
    document

EPO FORM 1503 03.82 (P04C01)

Europäisches
Patentamt

European
Patent Office

Office européen
des brevets

**Application Number**

EP 24 30 6016

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 11(completely); 15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

Application Number

EP 24 30 6016

The Search Division considers that the present European patent application does not comply with the requirements of unity of invention and relates to several inventions or groups of inventions, namely:

1. claims: 1-3, 11(completely); 15(partially)

   Method for obtaining a neighbour template of samples in a reconstructed neighbourhood of the target block, wherein its width is based on the height of the target block and its height is based on the width of the target block.
   ---

2. claims: 4, 5, 12(completely); 15(partially)

   Method for defining a primary intra prediction mode and a secondary intra prediction mode in TIMD, regardless of which set the primary intra prediction mode originates from.
   ---

3. claims: 6-8, 13(completely); 15(partially)

   Uses only regular intra prediction modes (i.e no wide angle modes) to predict the neighbouring template from the reference array.
   ---

4. claims: 9, 10, 14(completely); 15(partially)

   Uses different reference arrays (top and left) to predict the corresponding two parts of the template, wherein the candidate intra prediction mode is used for the first part (either top or left) and a second intra prediction mode which has a prediction direction opposite to that of the candidate mode is used for the second part.
   ---

## ANNEX TO THE EUROPEAN SEARCH REPORT
## ON EUROPEAN PATENT APPLICATION NO.

EP 24 30 6016

06-12-2024

| Patent document cited in search report | Publication date | Patent family member(s) | | Publication date |
|---|---|---|---|---|
| WO 2023133245 A1 | 13-07-2023 | EP | 4460965 A1 | 13-11-2024 |
| | | US | 2024364870 A1 | 31-10-2024 |
| | | WO | 2023133245 A1 | 13-07-2023 |
| US 2024187576 A1 | 06-06-2024 | CN | 118216145 A | 18-06-2024 |
| | | US | 2024187576 A1 | 06-06-2024 |
| | | WO | 2023016408 A1 | 16-02-2023 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *JVET-AF2025: Algorithm description of Enhanced Compression Model 11 (ECM 11) / Joint Video Experts Team (JVET) of ITU-T SG 16 WP 3 and ISO/IEC JTC 1/SC 29,*, 13 October 2023

- **JIANLE CHEN** ; **YAN YE** ; **SEUNG HWAN KIM**. JVET-T2002, Algorithm description for Versatile Video Coding and Test Model 11 (VTM 11). *Joint Video Experts Team (JVET) of ITU-T SG 16 WP 3 and ISO/IEC JTC 1/SC 2*, 07 October 2020